# EUROPÄISCHE PATENTSCHRIFT

(11) **EP 1 504 802 B1**
(45) Veröffentlichungstag und Bekanntmachung des Hinweises auf die Patenterteilung: **29.11.2006**
(21) Anmeldenummer: 04017271.0
(22) Anmeldetag: 22.07.2004
(51) Int. Cl.: B01D 46/04, B01D 46/42

(54) **Vakkuumfördereinrichtung mit einem mehrstufigen Filtersystem**
Vacuum conveying device with multistage filter system
Dispositif de transport sous vide avec un système de filtre à plusieurs étages

(30) Priorität: 05.08.2003 DE 20312074 U
(43) Veröffentlichungstag der Anmeldung: 09.02.2005
(73) Patentinhaber: Volkmann GmbH, 59494 Soest (DE)
(72) Erfinder: Volkmann, Thilo, 59494 Soest (DE)
(74) Vertreter: GROSSE BOCKHORNI SCHUMACHER

(56) Entgegenhaltungen:
- DE-A- 2 306 002
- US-A- 3 092 479
- PATENT ABSTRACTS OF JAPAN & JP 04 363116 A (TAKUMA CO LTD), 16. Dezember 1992 (1992-12-16)

## Beschreibung

Die Erfindung betrifft eine Vakuumfördereinrichtung mit einem mehrstufigen Filtersystem, das mindestens einen Innenfilter, einen Außenfilter und einen Filteradapter zum insbesondere luft- und/oder fluiddichten Einfügen mindestens eines der Filter aufweist, bei der der Außenfilter stromauf des Innenfilters angeordnet ist.

Vakuumförderer transportieren Material (Pulver, Granulate, Stäube, Tabletten, Kleinteile usw.) im Sauggasstrom, in der Regel Luft oder Inertgas.

Das Material wird von einer Aufgabestelle z.B. mit Handsaugrohr, Aufgabetrichter o.ä. angesaugt, durch eine Schlauch- oder Rohrleitung transportiert und gelangt über eine Einsaugöffnung in den Vakuumförderer. Im Vakuumförderer trennt, in der Regel durch Fliehkräfte und Sedimentation unterstützt, ein eingesetztes Filterelement das transportierte Material vom Sauggas. Das transportierte Material wird im Abscheidebehälter des Vakuumförderers gesammelt. Der gefilterte Sauggasstrom verläßt den Abscheidebehälter und durchströmt die den Förderprozeß antreibende Vakuumpumpe, die üblicherweise direkt auf dem Oberteil des Vakuumförderers fest installiert und - auch unabhängig von der Umweltentlastung - vor Verschmutzung zu schützen ist. Nach erfolgtem Füllvorgang des Abscheidebehälters wird die Vakuumpumpe ausgeschaltet oder der Sauggasstrom durch ein auf der gefilterten (Rein-)Gasseite vorgesehenes Ventil zwischen Abscheidebehälter und Vakuumpumpe unterbrochen.

Bei einem Standard-Vakuumförderer öffnet nun ein unten im Abscheidebehälter vorgesehenes Entleerventil und das transportierte Material fällt durch die Entleeröffnung aus dem Abscheidebehälter heraus.

Brückenbildende Materialien können hilfsweise fluidisiert oder mit Überdruck aus dem Abscheidebehälter herausgedrückt werden. Der Filter wird mittels Gegenblasung von der Reingasseite her vom anhaftenden Filterkuchen gereinigt. Die Dauer der einzelnen Saug- und Entleertakte wird üblicherweise über eine Taktsteuerung mit einstellbaren Saug- und Entleerzeiten geregelt. Saug- und Entleerzeiten sind bei Vakuumförderern üblicherweise relativ kurz und betragen in der Regel jeweils nur wenige Sekunden. Da der Filterkuchen sehr häufig abgereinigt werden kann, erlaubt diese kurze Taktung eine äußerst kompakte Bauform mit extrem kleinen Filterflächen (im Vergleich zur Anströmgeschwindigkeit in üblichen Luft-Filteranlagen).

Die hohen Anströmgeschwindigkeiten und die in der Regel mehrfach in jeder Minute wechselnde Belastungsrichtung (Einsaugen, Gegenblasimpuls) stellen hohe Anforderungen an Filtersysteme für Vakuumfördereinrichtungen. Die aus dem Stand der Technik bekannten Filtersystemlösungen werden diesen Anforderungen oftmals nicht gerecht. Dazu gehören insbesondere sogenannte Filterkerzen aus gesinterten Kunststoffen, Metallen oder Keramikwerkstoffen, sogenannte Tiefenfilter, die als starre, einenends geschlossene Rohre gestaltet sind.

Das angesaugte Gas passiert die Poren des Filters, während das transportierte Material bzw. der am Filter anhaftende Feinstoffanteil an der Oberfläche des Filters gestoppt wird und sich über eine gewisse Tiefe in die Poren des Filters einlagert. Die Folge ist ein erhöhter Filter-Differenzdruck, was zu Ermüdungserscheinungen des Filters durch die häufig wechselnden Kräfte und bis zum Filterabriß führen kann. Die Filterfeinheit dieser Filter beträgt für Vakuumförderer üblicherweise 1 bis 1,5 µm.

Des weiteren sind einstufige Oberflächenfilter aus flexiblem Flächenmaterial bekannt. Sie arbeiten in der Regel mit einem sehr feinen Filtergewebe oder Filtervlies mit einer aufgebrachten Membranschicht, die in der Lage ist, auch sehr feine Partikel zurückzuhalten (für Stoffe > 0,1 µm). Allerdings ist diese feine Filterschicht bei Vakuumförderern hohen Belastungen, wie extrem häufigen Einschlägen von schnellen Teilchen, ausgesetzt, so dass Membranen relativ schnell zerstört werden können. Diese Filtermaterialien werden üblicherweise ähnlich wie bei Kfz-Luftfiltern sternförmig gefaltet, um so eine große Filteroberfläche bei geringen Anströmgeschwindigkeiten zu erreichen.

Schließlich sind die sogenannten Beutelfilter meist aus einem Filzwerkstoff aufgebaut, der oftmals zusätzlich auf der Anströmseite mit einer Membran beschichtet ist. Beutelfilter bieten den Vorteil, dass sie sich bei der Gegenblas-Filterreinigung aufblähen und der Filterkuchen dadurch weitaus besser als bei anderen Filtersystemen abreinigen läßt. Ihr Vorteil ist gleichzeitig ihr Nachteil: Die häufige Bewegung des Filterbeutels führt zur hohen Beanspruchung von Nähten, Verbindungsstellen und der Filtermembran.

Um auch bei kritischen, z.B. gesundheitsgefährdenden Stoffen, sicherzugehen, dass die Belastung der Umgebung durch Restpartikel in der bereits gefilterten Luft auf einem zulässig geringen Niveau gehalten wird, wird die Abluft von Vakuumförderern mit nur einstufigem Filter üblicherweise an eine Abluftreinigung weitergeleitet. Alternativ kann zur weiteren Reinigung der Abluft des Vakuumförderers ein sogenannter Polizei-Filter eingesetzt werden, der als zweite Filterstufe die Qualität der Abluft sicherstellt. Diese zweite Filterstufe kann auch als zusätzliches Modul stromab nach dem eigentlichen Arbeitsfilter aber noch vor der Vakuumpumpe des Vakuumförderers eingesetzt werden. Hierbei ergeben sich jedoch in vielen Fällen Bauhöhenprobleme.

Davon ausgehend liegt der Erfindung die Aufgabe zugrunde, für eine Vakuumfördereinrichtung ein Filtersystem bereitzustellen, was sowohl die reinigungstechnischen Elemente konventioneller Filter, als auch die sicherheitsrelevanten Vorteile mehrstufiger Systeme aufweist, dabei in seiner Bauart aber kompakt bleibt.

Zur Lösung dieser Aufgabe wird eine Vorrichtung der eingangs bezeichneten Art vorgeschlagen, bei der der mindestens eine Innenfilter als Trageinheit für den mindestens einen auf diesen aufziehbaren oder in diesen einziehbaren Außenfilter dient und mit dem Filteradapter verbindbar ist.

Der Grundgedanke einer Vakuumfördereinrichtung mit einem mehrstufigen Filtersystem, das mindestens aus einem Innenfilter, einem Außenfilter und einem Filteradapter besteht, wobei der Innenfilter den Außenfilter trägt und die Filter an dem Filteradapter befestigbar oder befestigt sind, kann in vielfacher Weise verwirklicht werden. In jedem Fall wird mit einfachen Mitteln erreicht, dass eine kompakte Bauform durch ein Aufeinanderschieben der Filter und ein einfacher Ein- und Ausbau des Filtersystems durch Verwendung eines Filteradapters sichergestellt wird. Dabei bezeichnen die Begriffe Innen-, Außen, Arbeits- und Sicherheitsfilter allgemein ein ganzes Spektrum unterschiedlicher Filter. Dabei beziehen sich die Orientierungsangaben "Innen" auf die Stromabposition und "Außen" auf die Stromaufposition der beiden Filter/Filtergruppen zueinander im Zustand der Durchströmung des Filters mit dem zu filternden Medium. Der Begriff Filteradapter ist im Sinne der Erfindung so zu verstehen, dass er jede Art von Vorrichtungen beschreibt, die die benutzten Filter mit der Befestigungsvorrichtung an einer Vakuumpumpenvorrichtung in beliebiger Weise verbinden kann.

Um eine einfache Trageinheit mit einer großen Filteroberfläche bereitzustellen, kann der mindestens eine Innenfilter die Form eines Stützkorbes aufweisen oder selbst durch einen solchen Stützkorb verstärkt sein.

Um eine kostengünstige insbesondere differenzdruckarme und sichere Filtrierung als auch eine möglichst große Stabilität des tragenden Filters zu erreichen, kann der mindestens eine tragende Innenfilter vorzugsweise als Sinter- oder Sternfilter, insbesondere in der Form von Filterpatronen oder Stützkörben, ausgebildet sein.

Um der unterschiedlichen Beanspruchung der einzelnen Filter gerecht zu werden und die mit einem Austausch der Filter verbundenen Kosten zu reduzieren, kann mindestens ein Innenfilter ein Sicherheitsfilter und ein Außenfilter ein Arbeitsfilter sein.

Um eine effektive Reinigung der Filter von etwaigem Filterkuchen zu bewerkstelligen, kann der Außenfilter elastisch aufblähbar sein, insbesondere mittels Gegenblasimpuls.

Um die Funktion der einzelnen Filterstufen zu verbessern, können zwischen mindestens einem Innen- und Außenfilterpaar Anstandshalter angeordnet sein. Die daraus resultierenden Hohlraumausbildungen verhindern zum einen einen direkten Filterkontakt und dienen zum anderen als Differenzdruck-Meßkammer zur Messung von Filterdifferenzdrücken. Dadurch kann z.B. ein übermäßiges Anwachsen des Filterkuchens (hoher Differenzdruck), insbesondere aber auch ein etwaiger Filterriß (geringer werdender Differenzdruck) festgestellt werden.

Um, insbesondere beim Umgang mit kritischen Fördermaterialien, permanent über die Funktionstüchtigkeit und Leistung der Filter informiert zu sein, können Meßsensoren zur Differenzdruckmessung zwischen mindestens einem Innen- und Außenfilter vorgesehen sein. So können anhand von Messungen des Differenzdruckes Rückschlüsse auf den Luftmengendurchlaß und damit auf den Zustand des Filters gewonnen werden.

Um gegebenenfalls eine Anordnung der Meßsensoren außerhalb des Filtersystems zu ermöglichen, können in dem Filteradapter zu den Meßsensoren führende Verbindungskanäle zur Differenzdruckmessung außerhalb der Hohlräume zwischen mindestens einem Innen- und Außenfilter vorgesehen sein.

Um das Anbringen des mehrstufigen Filtersystem mittels des Filteradapters an eine Vakuumpumpenvorrichtung möglichst einfach und variabel zu gestalten, kann der Filteradapter mehrteilig sein und können einzelne Filteradapterteile luft- und/oder fluiddicht verbindbar, insbesondere aufschiebbar und/oder verschraubbar, sein.

Um eine schnell befestigbare bzw. lösbare aber dennoch sichere und luftdichte Verbindung zwischen den einzelnen Filtern und/oder Filteradapterteilen und dem Filteradapter bzw. den Filteradapterteilen zu gewährleisten, kann der mindestens eine Außenfilter zur lösbaren Verbindung mit einem Dichtungsring versehen oder versehbar sein.

Um eine effektive Reinigung des Außenfilters zu erlauben, wird der mindestens eine aufblähbare Außenfilter zum Abreinigen des anhaftenden Filterkuchens und/oder der Feinstoffanteile durch einen Gegenblasimpuls reversibel aufgeblasen. Durch den Aufblasprozeß wird eine durch eine Krümmung erzielte Oberflächenvergrößerung erzielt. Die daraus resultierenden und an den an der Oberfläche anhaftenden Filterkuchen angreifenden Scher- und Zugkräfte bewirken eine effektive Abreinigung der Filteroberfläche.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein bevorzugtes Ausführungsbeispiel des erfindungsgemäßen mehrstufigen Filtersystems für Vakuumfördereinrichtungen dargestellt ist. Dabei zeigen die Zeichnungen das bevorzugte Ausführungsbeispiel eines zweistufigen Filtersystems. Im einzelnen zeigen die Zeichnungen:
- Fig. 1: ein zweistufiges Filtersystem einer Vakuumfördereinrichtung mit einem mehrteiligen Filteradapter in montierter Form in Seiten- bzw. Längsschnittansicht;
- Fig. 2: einen zweite Ausführungsform eines mit Luftkanälen ausgestatteten mehrteiligen Filteradapters, vergrößerte Detailansicht sowie;
- Fig. 3: Funktionsschaltbild eines Vakuumförderers sowie
- Fig. 4A/B: alternative Ausführungsformen des Filtersystems nach Fig. 1 mit einem fest mit einer Filterplatte verbundenen Innenfilter.

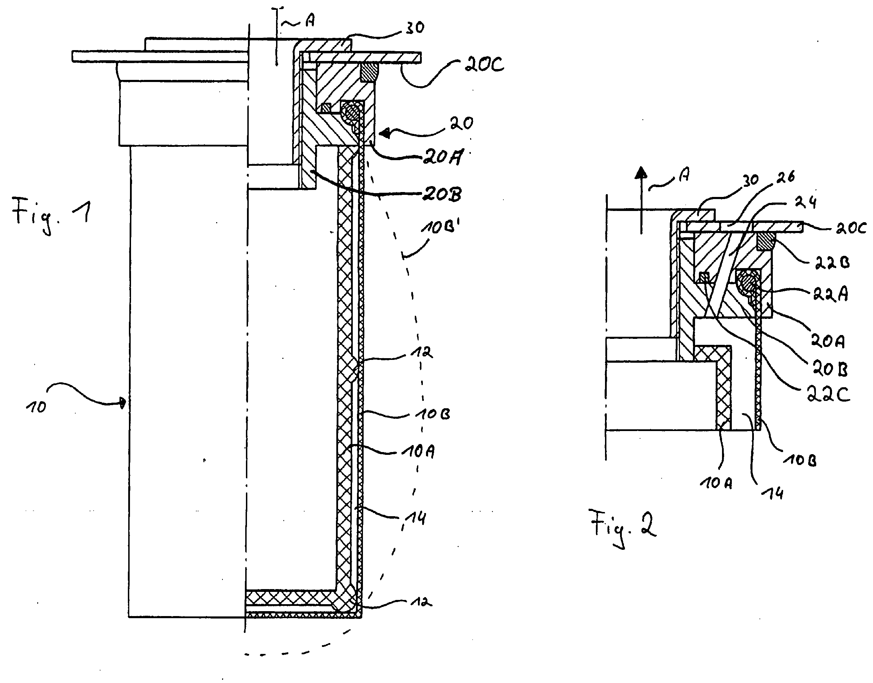

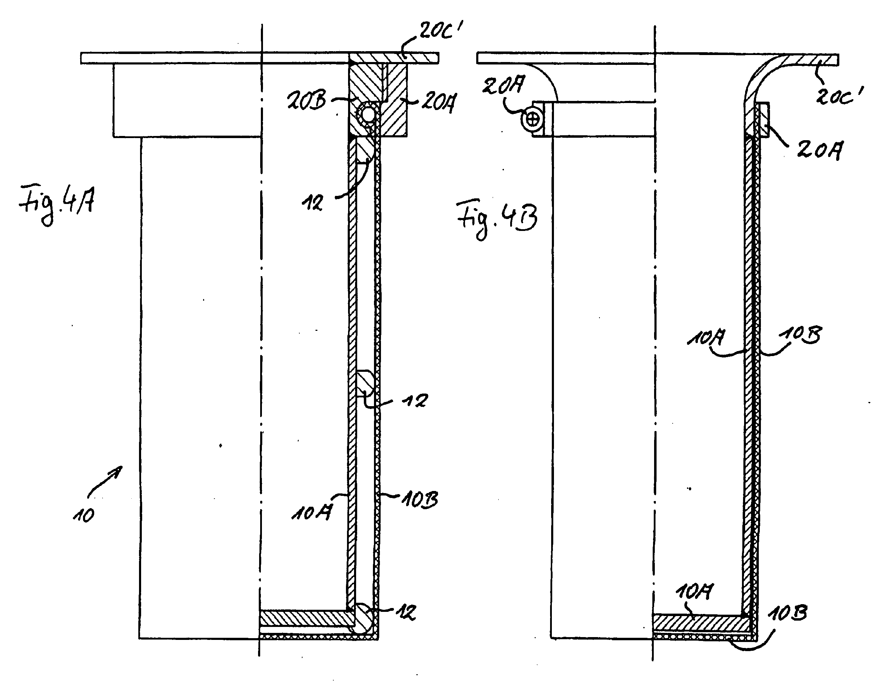

Das aus Figur 1 ersichtliche zylindrische, mehrstufige Filtersystem 10 umfaßt einen mit Abstandshaltern 12 ausgestatteten und einen Außenfilter 10B tragenden Innenfilter 10A und einen mehrteiligen Filteradapter 20. Der Innenfilter 10A ist vorzugsweise ein Sicherheitsfilter in Form eines eigensteifen Stützkorbes aus beispielsweise hochwertigen Polyestervliesen oder aus Nadelfilz, ggf. mit aufgebrachter Filtermembrane (teflonisiert) oder mit GORE-TEX Beschichtung. Über diesen wird der Außenfilter 10B, vorzugsweise ein konventioneller und kostengünstiger Arbeitsfilter, beispielsweise aus Papier oder papierähnlichen Materialien, gestülpt, gespannt oder gestreift. Die Abstandshalter 12 bewirken, dass Innen- 10A und Außenfilter 10B nicht direkt aufeinanderliegen, so dass folglich ein Hohlraum 14 zwischen diesen verbleibt. Der Stützkorb ist der Saugströmung A entgegengesetzt orientiert, so dass er auf seiner Außenseite angeströmt wird. Neben der eigentlichen Filtervorrichtung zeigt Figur 1 auch eine Filterbefestigungsplatte 20c einer Vakuumfördereinrichtung 100 (Fig. 3) mit zugehörender Verschraubhülse 30 mit der das mehrstufige Filtersystem 10 unter zur Hilfenahme des Filteradapters 20 befestigt und gleichzeitig zusammengehalten werden kann. Pfeil A zeigt die Luftansaugrichtung der Vakuumpumpenvorrichtung 40. Die um den Außenfilter 10B verlaufende gestrichelte Linie 10B' deutet den Verlauf an, den die Oberfläche des Außenfilters 10B im reversibel aufgeblasenen Zustand durch insbesondere einen Gegenblasimpuls gegebenenfalls einnehmen kann.

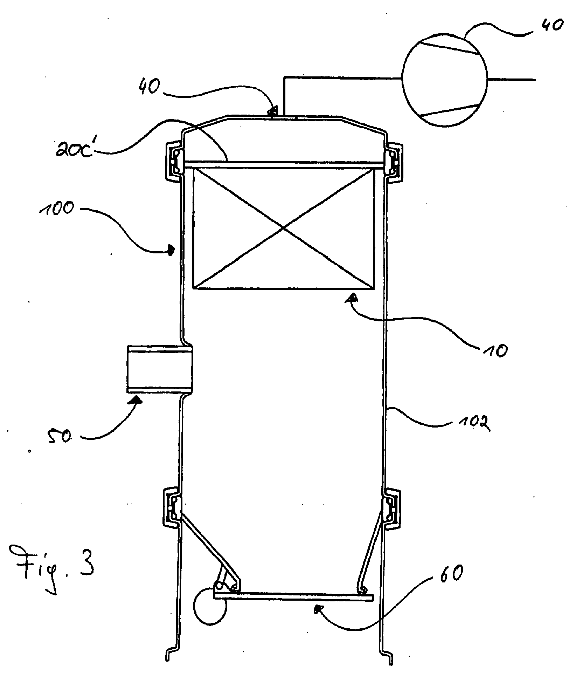

In Figur 2 ist ein Ausschnitt eines alternativen mehrteiligen Filteradapters 20 mit einem Verbindungskanal 24 ersichtlich. Der Filteradapter setzt sich aus drei Teilen, 20A, 20B und 20C zusammen, wobei 20C gleichzeitig als Filterbefestigungsplatte dienen kann. Zwischen den Filteradapterteilen 20A und 20B kann in deren auseinandergeschobenem Zustand der Außenfilter 10B eingesetzt werden, der an seinem oberen Mündungsrand vorteilhafterweise einen Dichtungsring 22A aufweist, womit eine luft- und/oder fluiddichte Verbindung zwischen dem Außenfilter 10B und den zwei Filteradapterteilen 20A und 20B ermöglicht wird. Der Innenfilter 10A kann mit Befestigungsmitteln, wie beispielsweise Verklebung, an dem Filteradapterteil 20B luft- und/oder fluiddicht befestigt werden. Dabei ist eine einfache Montage für den Außenfilter vorgesehen, die für den Sicherheitsinnenfilter aufgrund der selteneren Auswechslung allerdings nicht notwendig ist.

Wie ersichtlich, durchzieht ein Verbindungskanal 24 alle drei Filteradapterteile 20A, 20B und 20C und verbindet damit den zwischen Innen- und Außenfilter gelegenen Hohlraum 14 mit der Umgebung. Zur Montage eines Meßsensors und/oder einer Gegenblas-Luftleitung weist Filteradapterteil 20C eine Öffnung 26 auf. Zur sicheren Abdichtung der Filteradapterteile 20A und 20C werden weitere Dichtungsringe 22B und 22C verwendet.

In Umkehrung der Filteranordnung kann der Stützkorb auch in Richtung der Strömung A orientiert, also auf seiner Innenseite angeströmt sein und den Außenfilter auf seiner Innenseite, d.h. ebenfalls stromauf tragen.

Aus Fig. 3 ist eine Vakuumfördereinrichtung 100 ersichtlich. In dieser sind symbolisch das mehrstufige Filtersystem 10, die Vakuumpumpenvorrichtung 40, ein Ansaugstutzen 50, das als Filterbefestigungsplatte 20C' dienbare Filteradapterteil 20C und eine Entleervorrichtung 60 zu erkennen, die in oder an dem Abscheidergehäuse 102 der Vakuumfördereinrichtung 100 vorgesehen sind.

Die beiden alternativen Ausführungsformen nach Figuren 4A und 4B unterscheiden sich von den Ausführungsformen nach Figuren 1 und 2 u. a. dadurch, dass der Innenfilter 10A mit einer Filterplatte 20C' unlösbar verbunden ist. Zu diesem Zweck ist bei dem Ausführungsbeispiel nach Fig. 4A ein ringförmiges Filteradapterteil 20B einenends mit der Filterplatte 20C' und anderenends mit dem Innenfilter 10A durch Schweißen verbunden. Ein weiteres Filteradapterteil 20A ist auf das Filteradapterteil 20B mittels einer Innen-/Außen-Gewindeverbindung verbindbar und klemmt, wie bei den Ausführungsbeispielen nach Figuren 1 und 2 den Außenfilter 10B umlaufend dichtend ein. Ein weiterer Unterschied besteht darin, dass Abstandshalter 12 von dem Innenfilter getrennte Bauteile sind, die austauschbar oder mit dem Innenfilter, z. B. durch Verkleben oder Verschweißen verbindbar sind.

Bei dem Ausführungsbeispiel nach Fig. 4B besteht der Filteradapter 20 aus einem trompetenförmig geformten Bestandteil einer Filterplatte 10C'. Der Innenfilter 10A ist mit dem umlaufenden Rand der trompetenartigen Verformung durch Verschweißen verbunden, wobei dieser Innenfilter zweiteilig ist und aus einem rohrförmigen Wandteil und einen plattenartigen Bodenteil besteht, die miteinander durch Verschweißen verbunden sind, wie es für Sintermetalle oder Kunststoffe an sich bekannt ist. Alternativ ist auch eine Verklebung möglich, wie beispielsweise bei gesinterten Kunststofffiltern. Der weitere Unterschied bei der Ausführungsform nach Fig. 4B besteht darin, dass der Außenfilter 10B ohne seitlichen Abstand über den rohrförmigen Teil des Innenfilters 10A gezogen und im Bereich der trompetenartigen Verformung über ein Spannelement, wie eine Schelle (Adapterteil 20A) in leicht austauschbarer Weise festgespannt ist. Im plattenartigen Bodenbereich kann der Außenfilter ebenfalls dicht am Innenfilter anliegen; vorzugsweise aber unter Freilassen eines Abstandsspaltes, der z. B. durch einen Abstandshalter aufrechterhalten werden kann.

### Bezugszeichenliste

- 10: mehrstufiges Filtersystem
- 10A: Innenfilter
- 10B: Außenfilter
- 12: Abstandshalter
- 14: Hohlraumausbildung
- 20: Filteradapter
- 20A: erstes Filteradapterteil
- 20B: zweites Filteradapterteil
- 20C: drittes Filteradapterteil
- 20C': Filterplatte
- 22A: Dichtungsring zwischen Adapter und Filter
- 22B: erster Dichtungsring zwischen Filteradapterteilen
- 22C: zweier Dichtungsring zwischen Filteradapterteilen
- 24: Verbindungskanal
- 26: Öffnung
- 30: Verschraubungshülse
- 40: Vakuumpumpenvorrichtung
- 50: Ansaugstutzen
- 60: Entleervorrichtung
- 100: Vakuumfördereinrichtung
- 102: Abscheidergehäuse

- A: Luftansaugrichtung

## Patentansprüche

1. Vakuumfördereinrichtung (10) mit einem mehrstufigen Filtersystem, das mindestens einen Innenfilter (10A), einen Außenfilter (10B) und einen Filteradapter (20) zum insbesondere luft- und/oder fluiddichten Einfügen mindestens eines der Filter aufweist, bei der der Außenfilter stromauf des Innenfilters angeordnet ist
**dadurch gekennzeichnet, dass**
der Filteradapter (20) mehrteilig ist,
dass der mindestens eine Innenfilter (10A) als Trageinheit und Sicherheitsfilter ausgebildet ist,
dass der mindestens eine Außenfilter (10B) als Arbeitsfilter ausgebildet und in austauschbarer Weise lösbar auf den Innenfilter (10A) aufziehbar oder in diesen einziehbar ist, wobei ein Adapterteil (20A) den Außenfilter (10B) dichtend mit einem weiteren Adapterteil (20B) verbindet und der Innenfilter mit dem weiteren Adapterteil (20B) verbindbar oder verbunden ist.

2. Vakuumfördereinrichtung nach Anspruch 1, **dadurch gekennzeichnet, dass** der mindestens eine Innenfilter die Form eines Stützkorbes aufweist.

3. Vakuumfördereinrichtung nach einem der Ansprüche 1 oder 2, **dadurch gekennzeichnet, dass** der mindestens eine tragende Innenfilter vorzugsweise als Sinter- oder Stemfilter, insbesondere in der Form einer Filterpatrone, ausgebildet ist.

4. Vakuumfördereinrichtung nach einem der Ansprüche 1 bis 3, **dadurch gekennzeichnet, dass** ein Adapterteil integraler Bestandteil einer Filterplatte (20C') ist.

5. Vakuumfördereinrichtung nach Anspruch 1 bis 4, **dadurch gekennzeichnet, dass** mindestens der Außenfilter (10B) elastisch aufblähbar ist, insbesondere mittels Gegenblasimpuls.

6. Vakuumfördereinrichtung nach einem der Ansprüche 1 bis 5, **dadurch gekennzeichnet, dass** zwischen dem mindestens einen Innenfilter und dem mindestens einen Außenfilter ein oder mehrere Abstandshalter (12) zur Ausbildung eine Hohlraums (14) angeordnet sind.

7. Vakuumfördereinrichtung nach einem der Ansprüche 1 bis 6, **dadurch gekennzeichnet, dass** Meßsensoren zur Differenzdruckmessung zwischen dem mindestens einen Innenfilter und dem mindestens einen Außenfilter vorgesehen sind.

8. Vakuumfördereinrichtung nach Anspruch 6 oder 7, **dadurch gekennzeichnet, dass** in dem Filteradapter (20) mindestens ein von dem Hohlraum (14) nach außen führender Verbindungskanal (24) zur außerhalb des Hohlraums (14) durchzuführenden Differenzdruckmessung zwischen dem mindestens einen Innenfilter und dem mindestens einen Außenfilter und/oder zum Gegenblasen vorgesehen ist.

9. Vakuumfördereinrichtung nach einem der Ansprüche 1 bis 8, **dadurch gekennzeichnet, dass** einzelne vorzugsweise ringförmige Filteradapterteile (20A, 20B, 20C) luft- und/oder fluiddicht verbindbar, insbesondere aufschiebbar und/oder verschraubbar sind.

10. Vakuumfördereinrichtung nach einem der Ansprüche 1 bis 9, **dadurch gekennzeichnet, dass** der mindestens eine Außenfilter (10B) zum lösbaren Verbinden mit dem Innenfilter und/oder dem Filteradapter (20) mit einem Dichtungsring (22A) versehen oder versehbar ist.

## Claims

1. Vacuum conveying device (10) with a multi-stage filter system, which has at least one inner filter (10A), one outer filter (10B), and one filter adapter (20) for, in particular, the air-tight or fluid-tight insertion of at least one of the filters, in which the outer filter is arranged upstream of the inner filter, **characterised in that**
the filter adapter (20) is multi-layered,
**in that** the at least one inner filter (10A) is designed as a carrier unit and safety filter,
**in that** the at least one outer filter (10B) is designed as a working filter and can be drawn onto the inner filter (10A) as detachable and in a replaceable manner, or can be drawn into it, wherein an adapter part (20A) connects the outer filter (10B) in a sealing manner to a further adapter part (20B) and the inner filter can be connected or is connected to the further adapter part (20B).

2. Vacuum conveying device according to Claim 1, **characterised in that** the at least one inner filter has the shape of a support container.

3. Vacuum conveying device according to one of Claims 1 or 2, **characterised in that** the at least one carrier inner filter is preferably designed as a sintered or star filter, in particular in the form of a filter cartridge.

4. Vacuum conveying device according to one of Claims 1 to 3, **characterised in that** an adapter part is an integral constituent part of a filter plate (20C').

5. Vacuum conveying device according to one of Claims 1 to 4, **characterised in that** at least the outer filter (10B) can be elastically inflated, in particular by way of a counter-puff pulse.

6. Vacuum conveying device according to one of Claims 1 to 5, **characterised in that** one or more spacer elements (12) are arranged between the at least one inner filter and the at least one outer filter to form a cavity (14).

7. Vacuum conveying device according to one of Claims 1 to 6, **characterised in that** measuring sensors are provided for differential pressure measurement between the at least one inner filter and the at least one outer filter.

8. Vacuum conveying device according to Claim 6 or 7, **characterised in that** at least one connection duct (24) is provided in the filter adapter (20), leading from the cavity (14) to the outside, to carry out differential pressure measurement outside the cavity (14) between the at least one inner filter and the at least one outer filter and/or for counter-puffing.

9. Vacuum conveying device according to one of Claims 1 to 8, **characterised in that** individual filter adapter parts (20A, 20B, 20C), preferably ring-shaped, can be connected so as to be air-tight and/or fluid-tight, in particular by being pushed on and/or screwed on.

10. Vacuum conveying device according to one of Claims 1 to 9, **characterised in that** the at least one outer filter (10B) is provided or can be provided with a sealing ring (22A) to provide a releasable connection to the inner filter and/or the filter adapter (20).

## Revendications

1. Dispositif de transport sous vide (10) avec un système de filtration à plusieurs étages comprenant au moins un filtre interne (10A), un filtre externe (10B) et un adaptateur de filtre (20) pour assurer notamment la jonction étanche à l'air et/ou aux fluides, d'au moins un des filtres, le filtre externe étant disposé en amont du filtre interne,
**caractérisé en ce que**
- l'adaptateur de filtre (20) est en plusieurs parties,
- l'au moins un filtre interne (10A) constitue une unité porteuse et un filtre de sécurité,
- l'au moins un filtre externe (10B) est un filtre de travail qui peut être échangé de manière amovible en étant monté sur le filtre interne (10A) ou introduit dans celui-ci, une partie d'adaptateur (20A) reliant de façon étanche le filtre externe (10B) à une autre partie d'adaptateur (20B), à laquelle le filtre interne est ou peut être relié.

2. Dispositif de transport sous vide selon la revendication 1,
**caractérisé en ce que**
l'au moins un filtre interne (10A) a la forme d'un panier d'appui.

3. Dispositif de transport sous vide selon la revendication 1 ou 2,
**caractérisé en ce que** ,
l'au moins un filtre interne (10A) porteur est avantageusement un filtre fritté ou un filtre en étoile, sous la forme notamment d'une cartouche filtrante.

4. Dispositif de transport sous vide selon une des revendications 1 à 3,
**caractérisé en ce qu'**
une partie d'adaptateur est un composant intégral d'une plaque filtrante (20C').

5. Dispositif de transport sous vide selon une des revendications 1 à 4,
**caractérisé en ce qu'**
au moins le filtre externe (10B) peut être gonflé élastiquement, notamment par une impulsion de soufflage à contre-courant.

6. Dispositif de transport sous vide selon une des revendications 1 à 5,
**caractérisé en ce que**
pour créer un volume creux (14), un ou plusieurs espaceurs (12) sont disposés entre l'au moins un filtre interne (10A) et l'au moins un filtre externe (10B).

7. Dispositif de transport sous vide selon une des revendications 1 à 6,
**caractérisé en ce qu'**
entre l'au moins un filtre interne (10A) et l'au moins un filtre externe (10B), des capteurs mesurent la pression différentielle.

8. Dispositif de transport sous vide selon la revendication 6 ou 7,
**caractérisé en ce qu'**
dans l'adaptateur du filtre (20) au moins un canal de liaison (24) relie à l'extérieur le volume creux (14), de manière à mesurer à l'extérieur de celui-ci la différence de pression entre l'au moins un filtre interne (10A) et l'au moins un filtre externe (10B), et/ou pour souffler à contre-courant.

9. Dispositif de transport sous vide selon une des revendications 1 à 8,
**caractérisé en ce que**
des parties d'adaptateur de filtre (20A, 20B, 20C), individuelles et de préférence de forme annulaire, peuvent être reliées de façon étanche à l'air et/ou aux fluides, en particulier en étant emmanchées et/ou vissées l'une sur l'autre.

10. Dispositif de transport sous vide selon une des revendications 1 à 9,
**caractérisé en ce que**
l'au moins un filtre externe (10B) est relié ou peut être relié de manière amovible au filtre interne (10A) et/ou à l'adaptateur de filtre (20) au moyen d'une bague d'étanchéité (22A).
